# EUROPEAN PATENT APPLICATION

(11) **EP 4 657 837 A1**
(43) Date of publication of application: **03.12.2025**
(21) Application number: 24857706.6
(22) Date of filing: 15.03.2024
(51) Int. Cl.: H04M 1/02

(54) **MIDDLE FRAME OF ELECTRONIC DEVICE AND PROCESSING METHOD THEREFOR, AND ELECTRONIC DEVICE**

(30) Priority: 29.08.2023 CN 202311102023
(71) Applicant: Honor Device Co., Ltd., Shenzhen, Guangdong 518040 (CN)
(72) Inventor: LU, Xingbin, Shenzhen, Guangdong 518040 (CN); LI, Bin, Shenzhen, Guangdong 518040 (CN); CHEN, Hang, Shenzhen, Guangdong 518040 (CN); WAN, Weijian, Shenzhen, Guangdong 518040 (CN)
(74) Representative: Thun, Clemens
(86) International application number: PCT/CN2024/081863
(87) International publication number: WO 2025/044153

(57) **Abstract**

A middle frame of an electronic device, a processing method therefor, and the electronic device. The electronic device may include a handheld device, an in-vehicle device, a wearable device, a terminal device, or be connected to any one of a wireless modem, a cellular phone, a smartphone, a personal digital assistant, a computer, a tablet computer, a handheld computer, or the like. In embodiments of this application, a display module of the electronic device is located inside a first mounting cavity, a sound channel is relatively isolated from the first mounting cavity, and the sound channel is not communicated with the first mounting cavity. In this way, the display module is also relatively isolated from the sound channel, so that a medium like oil inside the sound channel is prevented from contacting the display module. This greatly reduces a probability of occurrence of a yellow spot phenomenon, so that entire quality of the electronic device is improved.

## Description

This application claims priority to Chinese Patent Application No. 202311102023.9, filed with the China National Intellectual Property Administration on August 29, 2023, and entitled "MIDDLE FRAME OF ELECTRONIC DEVICE, PROCESSING METHOD, AND ELECTRONIC DEVICE", which is incorporated herein by reference in its entirety.

### TECHNICAL FIELD

This application relates to the field of communication device technologies, and in particular, to a middle frame of an electronic device, a processing method, and the electronic device.

### BACKGROUND

An electronic device is usually provided with an earpiece. The earpiece is also referred to as a receiver whose main function is to convert an electrical signal into a sound. For example, when the electronic device is used for a call, the earpiece can transmit a sound of the other party during the call.

The earpiece is usually mounted inside the electronic device. To enable a sound in the earpiece to be conducted to the outside of the electronic device, the electronic device needs to be provided with a sound channel. The sound in the earpiece is conducted to the outside of the electronic device through the sound channel. With an increasing quantity of functions of the electronic device, a quantity of electronic members forming an electronic component also increased. How to reduce, to the greatest extent, impact on other electronic members of the electronic device while ensuring that the sound channel smoothly leads out the sound in the earpiece is one of important problems concerned by a person skilled in the art in electronic device design.

### SUMMARY

In embodiments of this application, to reduce a yellow spot phenomenon, a middle frame of an electronic device, a processing method, and the electronic device are provided.

In an embodiment of this application, a middle frame of an electronic device is provided. The electronic device includes a display screen and a sound production unit, where the display screen includes a transparent cover plate and a display module, and the sound production unit has a sound cavity. In this embodiment of this application, the middle frame includes a partition plate and a peripheral wall. The peripheral wall is circumferentially located around the partition plate. The partition plate and the peripheral wall form a first mounting cavity. The first mounting cavity is located at a side of the partition plate, and the first mounting cavity has an opening. The display module can be mounted inside the first mounting cavity through the opening. The peripheral wall includes a sealing surface. The transparent cover plate of the display screen can be circumferentially sealed and fitted with the sealing surface. The peripheral wall further includes a side surface located on a same side as the display screen.

In this embodiment of this application, the middle frame is further provided with a sound channel. The sound channel includes a sound inlet and a first sound outlet. The sound inlet can be communicated with a sound cavity of an earpiece. The first sound outlet is located at a side surface of the peripheral wall. A sound conducted from the sound cavity of the sound production unit can be propagated along the sound channel, and finally be diffused from the first sound outlet on the peripheral wall to the outside of the middle frame. In this embodiment of this application, the sound channel is relatively isolated from the first mounting cavity.

In this embodiment of this application, the display module is located inside the first mounting cavity, the sound channel is relatively isolated from the first mounting cavity, and the sound channel is not communicated with the first mounting cavity. In this way, the display module is also relatively isolated from the sound channel, so that a medium like oil inside the sound channel is prevented from contacting the display module. This greatly reduces a probability of occurrence of a yellow spot phenomenon, so that entire quality of the electronic device is improved. In addition, in this way, the first sound outlet and the display screen are located on a same side, so that a direction of the first sound outlet faces toward a side at which the display screen is located. This design conforms to a habit of a user to regularly hand-hold a mobile phone, and is convenient for the user to listen.

In an example, a side of the peripheral wall at which the opening is located is further provided with a stepped surface. At least a part of the stepped surface form the sealing surface. The transparent cover plate is supported on the stepped surface, and the transparent cover plate is circumferentially sealed with the stepped surface. The first sound outlet is located at a side of the sealing surface away from the first mounting cavity. In other words, a side surface of the peripheral wall at which the first sound outlet is provided is located at a periphery of the sealing surface. The sealing surface can separate the first sound outlet from the first mounting cavity.

In this embodiment, the transparent cover plate is supported on the stepped surface, and the peripheral wall located circumferentially around the transparent cover plate can play a role in mounting and positioning the transparent cover plate, so that mounting and fixing reliability is high. In addition, in this embodiment, the transparent cover plate does not project from the peripheral wall as much as possible, to improve appearance and quality of the electronic device.

In an example, in a sound propagation direction, the sound channel includes a first hole segment and a second hole segment. The first hole segment is connected to the second hole segment. The first hole segment is at least partially located inside the partition plate, the sound inlet is located at an end of the first hole segment away from the second hole segment, the second hole segment is located inside the peripheral wall, the first sound outlet is formed at an end of the second hole segment away from the first hole segment, and the second hole segment extends in a thickness direction of the electronic device.

In this embodiment, for easy processing, the sound channel includes two hole segments. Shapes and positions of the first hole segment and the second hole segment can be set based on a specific structure of the middle frame, so that flexibility of setting is high.

In an example, the earpiece and the display screen are generally separated at two sides of the partition plate. When the first sound outlet is provided at a side of the display screen, the first hole segment may be designed as an inclined hole segment. In the sound propagation direction, a distance between the first hole segment and a plane on which the display screen is located gradually decreases. In this way, it is convenient for a sound in the earpiece to propagate to the first sound outlet located at the side of the display screen. In addition, when the first hole segment is formed through injection molding, the first hole segment is obliquely provided, so that a mold core configured to form the first hole segment is drawn from the first hole segment to the outside of the middle frame.

In an example, the sound production unit is mounted offset to a side of the middle frame. In this way, the sound inlet on the middle frame is also mounted offset to the side of the middle frame, in other words, the sound inlet is mounted offset to a side of a central longitudinal plane of the middle frame. A projection of the first hole segment in the plane on which the display screen is located is also inclined, in other words, in the sound propagation direction, a spacing between the first hole segment and the central longitudinal plane gradually decreases. In this way, flexibility of setting other parts in the electronic device is further improved. In addition, the first hole segment can propagate a sound in the sound cavity in a direction toward the central longitudinal plane of the middle frame. This helps the sound be evenly diffused inside the second hole segment, to improve quality of the sound propagated to the outside of the electronic device.

In an example, the second hole segment includes a hole periphery wall and a hole bottom wall. The hole bottom wall is connected to a lower end of the hole periphery wall, and the first sound outlet is formed at an upper end of the hole periphery wall. The first hole segment extends through the hole periphery wall of the second hole segment, and the first hole segment is communicated with an interior of the second hole segment through a connection port on the hole periphery wall. The hole bottom wall is located at a side of the connection port away from the first sound outlet and has a predetermined spacing with the connection port.

In other words, in this embodiment of this application, the second hole segment further has hole space below the connection port. A volume of the second hole segment is large, to help improve the quality of the sound propagated to the outside of the electronic device.

In an example, the sound channel further includes a third hole segment. In the sound propagation direction, the third hole segment, the first hole segment, and the second hole segment are successively connected. An end of the third hole segment away from the first hole segment is the sound inlet, and the sound inlet completely covers a sound outlet surface of the sound cavity of the earpiece. In the thickness direction of the electronic device, the third hole segment is recessed from the sound inlet toward the first mounting cavity by a predetermined depth.

In this example, the sound inlet is provided opposite to a sound outlet surface of the sound cavity of the sound production unit, and the sound inlet completely covers the sound outlet surface of the sound cavity, to help a sound inside the sound cavity to enter the third hole segment. In addition, the first hole segment is communicated with the sound cavity of the earpiece through the third hole segment. The third hole segment can increase a volume of the sound channel to some extent, to help improve the quality of the sound propagated to the outside of the electronic device.

In an example, the third hole segment includes a groove bottom wall. The groove bottom wall is opposite to the sound inlet. The groove bottom wall is approximately parallel to the plane on which the display screen is located. In this way, a processing process for the groove bottom wall is simple and easy to be implemented.

In an example, the partition plate has a mounting surface. The mounting surface is provided at a side of the partition plate facing away from the first mounting cavity, and the mounting surface is located at a periphery of the sound inlet. The mounting surface can be sealed and fitted with a side wall of the earpiece located at a sound outlet surface side. In this way, the sound in the sound cavity can completely enter the third hole segment, to help improve intensity of the sound diffused to the outside of the electronic device. In addition, in this example, the mounting surface has a predetermined angle with the plane (an xy plane) on which the display screen is located. In comparison with the mounting surface of the earpiece parallel to the xy plane, in this embodiment of this application, the mounting surface has the predetermined angle with the xy plane. In this way, the sound production unit is inclined after being mounted, and an end of the sound production unit away from the first segment can be elevated to a side of the display screen by a predetermined height. A positive elastic piece and a negative elastic piece of the sound production unit can be arranged in the space, to reduce overall thickness of the electronic device. In addition, that the mounting surface is obliquely provided also helps the mold core forming the first hole segment be smoothly drawn to the outside of the middle frame.

In an example, the middle frame further includes a plurality of positioning blocks. The positioning blocks are circumferentially located around the mounting surface. The sound production unit is mounted inside space surrounded by the positioning blocks. The positioning block has a fitting portion for fitting and positioning a corresponding peripheral wall of the earpiece. After the earpiece is assembled with the positioning blocks, the sound outlet surface of the sound cavity of the sound production unit is provided opposite to the sound inlet of the middle frame. In this way, the sound conducted from the sound cavity completely enters the sound inlet, to improve the quality of the sound diffused to the outside of the electronic device. In addition, the positioning blocks can improve reliability of mounting the sound production unit to some extent.

In an example, the middle frame includes at least a plastic body, and the sound channel is located in the plastic body. The sound channel is processed and formed in the plastic body for ease of processing and forming.

In an example, at least the first hole segment in the sound channel is integrally formed with the plastic body through an injection molding process. In this way, subsequent mechanical processing is not needed, and forming is rapid.

In an example, the second hole segment is processed to shape through a cutting process or a milling process. In this way, difficulty of forming through injection molding can be reduced.

In an example, the peripheral wall includes an outer peripheral surface, the middle frame further includes the first sound outlet, and the first sound outlet connects the second hole segment to the outer peripheral surface. The first sound outlet is provided at the top of the middle frame. In this way, a sound in the sound channel is diffused to the outside of the middle frame through both the first sound outlet and the first sound outlet, to help achieve a three-dimensional stereophonic sound effect and improve effect of quality of a sound in the earpiece.

In an example, the first sound outlet is of a slot structure. Processing of the slot structure is simple, and effect of sound diffusion is good.

In an example, the sound production unit includes any one of the earpiece, a speaker, or a microphone, or is an integrated unit of several of the earpiece, the speaker, or the microphone, for example, the sound production unit is an integrated unit of the earpiece and the speaker, so that the electronic device is highly integrated.

According to a second aspect, an embodiment of this application further provides an electronic device. The electronic device includes a middle frame and a display screen. The middle frame is the middle frame according to any one of the foregoing examples. The display screen includes a transparent cover plate and a display module, the display module is located in a first mounting cavity, and the transparent cover plate is circumferentially sealed and fitted with a sealing surface.

According to a third aspect, an embodiment of this application further provides a processing method for a middle frame of an electronic device. The middle frame includes a metal body and a plastic body. The method includes:
preprocessing the metal body and a mold core configured to form a first hole segment;
placing the metal body and the mold core at a corresponding position of an injection molding device, and forming the plastic body through an injection molding process, where the plastic body and the metal body are formed into an integrated structure;
drawing the mold core to the outside of the middle frame; and
processing a second hole segment on the plastic body through a mechanical processing process.

The electronic device provided in embodiments of this application includes the foregoing middle frame, and the processing method for the middle frame is based on the foregoing middle frame. Therefore, the electronic device and the processing method for the middle frame also have technical effects of the middle frame.

### BRIEF DESCRIPTION OF DRAWINGS

FIG. 1 is a schematic diagram of a structure of an electronic device in a current technology;
FIG. 2 is a partial cross-sectional view of the electronic device shown in FIG. 1 taken along A-A;
FIG. 3 is a partial cross-sectional view of an electronic device in another embodiment in a current technology;
FIG. 4 is a schematic diagram of an arrangement of an adhesive between a display module and a middle frame in the electronic device shown in FIG. 2, where the display module is not shown;
FIG. 5 is a schematic diagram of an arrangement of an adhesive between a display module and a middle frame in another electronic device in a current technology, where the display module is not shown;
FIG. 6 is a schematic diagram of a structure of an electronic device according to an embodiment of this application;
FIG. 7 is a cross-sectional view of the electronic device shown in FIG. 6 taken along B-B;
FIG. 8 a partial enlarged view at D in FIG. 7;
FIG. 9 a partial enlarged view at C in FIG. 6;
FIG. 10 is a schematic diagram of an assembly of a middle frame and a sound production unit in FIG. 8;
FIG. 11 is a schematic diagram of a structure shown in FIG. 10 in a direction F', where a sound production unit is hidden;
FIG. 12 is a schematic diagram of FIG. 11 taken along G-G;
FIG. 13 is a schematic diagram of the structure shown in FIG. 8, where only a middle frame is showed;
FIG. 14 is a schematic diagram of a middle frame provided with a horizontal mounting surface;
FIG. 15 is a schematic diagram of the middle frame shown in FIG. 13 being provided with an inclined mounting surface;
FIG. 16 is a schematic diagram of a structure shown in FIG. 10 in a direction F, where a sound production unit is hidden;
FIG. 17 is a schematic diagram of a structure of an electronic device according to another embodiment of this application;
FIG. 18 is a cross-sectional view of the electronic device shown in FIG. 17 taken along H-H;
FIG. 19 is a schematic diagram of a structure of an electronic device in still another embodiment of this application; and
FIG. 20 shows an approximate position of a mold core for forming a first hole segment.

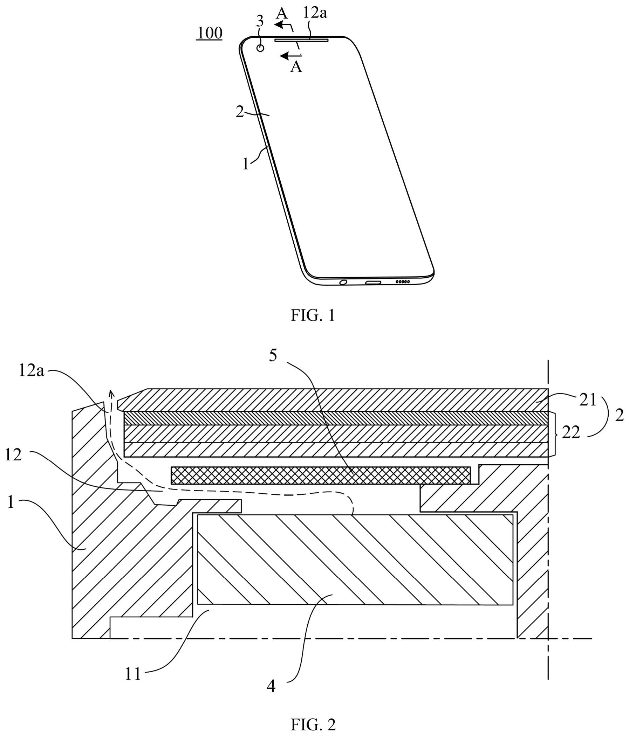

In FIG. 1 to FIG. 20:
1: middle frame; 1a: first mounting cavity; 101: peripheral wall; 1011: sealing surface; 1012: outer peripheral surface; 1013: side surface; 102: partition plate; 1021: positioning block; 1022: mounting surface; 1-1: metal body; 1-2: plastic body;
2: display screen; 21: transparent cover plate; 211: extension segment; 22: display module;
3: front-facing camera;
4: sound production unit; 41: sound cavity; 42: circumferential outer wall;
5: cover plate;
6: adhesive;
7: rear cover;
8: adhesive layer;
12: sound channel; 121: first hole segment; 122: second hole segment; 1221: hole bottom wall; 1222: hole periphery wall; 12a: first sound outlet; 12b: sound inlet; 123: third hole segment; 1231: hole bottom wall; 1211: connection port;
9: mold core;
10: elastic piece;
11: adhesive.

### DESCRIPTION OF EMBODIMENTS

FIG. 1 is a schematic diagram of a structure of an electronic device in a current technology. The electronic device 100 in FIG. 1 includes a middle frame 1, a display screen 2, and a front-facing camera 3. A first sound outlet 12a of a sound channel 12 that is communicated with a sound cavity (not shown) is provided at a side of the display screen 2.

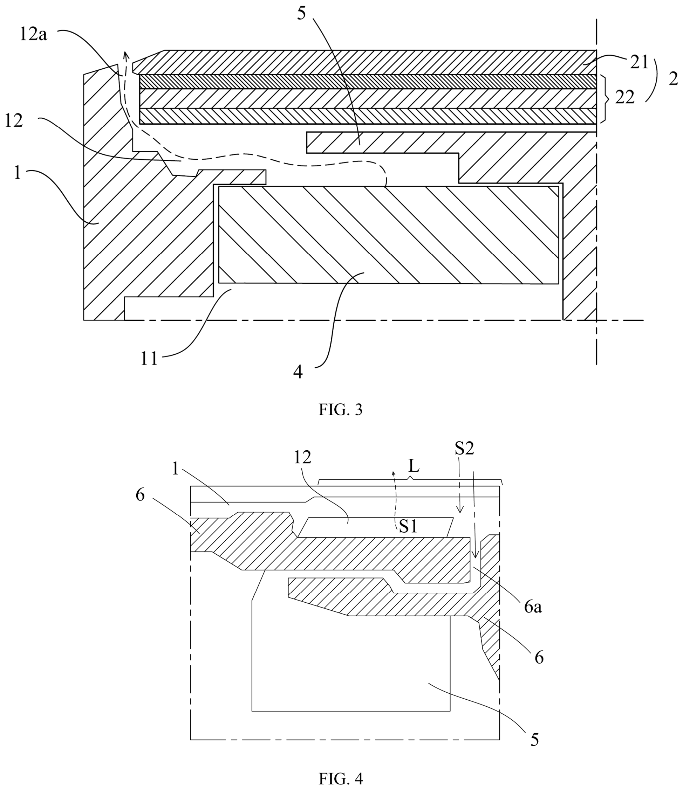

FIG. 2 and FIG. 3 show two different manners of providing the sound channel 12 in the current technology. Both FIG. 2 and FIG. 3 are cross-sectional views of a position of the first sound outlet 12a in the electronic device in the current technology. A cross-sectional position and a direction in both FIG. 2 and FIG. 3 are the same as that in FIG. 1 taken along A-A. A dashed line in both FIG. 2 and FIG. 3 indicates an approximate sound propagation path of a sound production unit 4, and the sound production unit 4 is an earpiece. A difference between FIG. 2 and FIG. 3 lies only in that a structure of a side of the sound channel 12 close to the earpiece is different. In both FIG. 2 and FIG. 3, a cover plate 5 is provided between the earpiece and the display screen, for guiding a sound in the sound cavity to be transmitted. The cover plate 5 and the middle frame 1 in FIG. 2 have a separate structure, and the cover plate 5 is mounted on the middle frame 1. In FIG. 3, a cover plate 13 above the earpiece and the middle frame 1 are integrated.

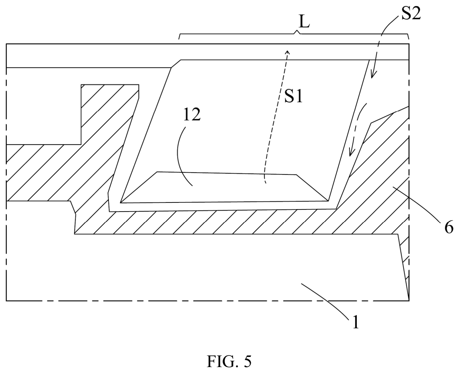

It may be learned from structures shown in FIG. 2 and FIG. 3 that the display screen 2 includes a transparent cover plate 21 and a display module 22 that are fixedly connected. The display module 22 is configured to display an image or a video, and is formed by superposing a plurality of functional layers. The functional layers include a polarizer layer, a light-emitting layer, a touch layer, a backlight layer, and the like. To understand composition of the display module 22 by a person skilled in the art, FIG. 2 and FIG. 3 only schematically show three layers. Certainly, a quantity of the functional layers of the display module 22 is not limited to what is shown in a figure. In the current technology, the sound channel 12 is surrounded by a part of the display module 22, a part of the transparent cover plate 21, and the middle frame 1. A slotted first sound outlet 12a is formed between the display screen 2 and the middle frame 1. With reference with a length of the middle frame 1 that forms the first sound outlet 12a and that is shown in FIG. 4 and FIG. 5, a length of the first sound outlet 12a is approximately L. Since the first sound outlet 12a is communicated with an external environment, during usage of the electronic device 100, external oil enters the inside of the electronic device 100 from the first sound outlet 12a and flows along the sound channel 12. When the oil flows to a side wall of the display module 22, the oil easily enters between the functional layers, generating a yellow spot phenomenon and affecting normal display of the display screen 2. In addition, when the oil entering from the first sound outlet 12a enters between the display module 22 and the transparent cover plate 21, the yellow spot phenomenon is also generated.

In addition, in the current technology, the display module 22 is fixed to the cover plate 5 by using an adhesive 6. FIG. 3 and FIG. 4 show arrangement manners of two types of adhesives 6 on the cover plate 5. A structure shown in FIG. 4 includes two pieces of adhesive 6, and the display module 22 is adhered and fixed to the cover plate 5 by using the two pieces of adhesive 6. A structure shown in FIG. 5 includes one piece of adhesive 6, and the display module 22 is adhered and fixed to the cover plate 5 by using the one piece of adhesive 6. The oil flows along an edge of the adhesive 6 and a gap 6a between the adhesives. It should be understood with reference to FIG. 1 that when the electronic device is provided with the front-facing camera 3, the display module 22 is provided with an opening (not shown in the figure) relative to a position of the front-facing camera 3. When the oil flows to a position of the opening along the adhesive, the oil also enters between the functional layers, further expanding a generation region of the yellow spot phenomenon. In FIG. 4 and FIG. 5, a dashed line S1 is a sound propagation path of the earpiece, and a dash-dot line S2 is a flow path of an impurity of the oil.

Therefore, how to reduce a defect of a yellow spot is a technical problem urgently to be resolved by a person skilled in the art.

Based on the foregoing research findings, an inventor of this application explores and performs lots of experiments to provide an electronic device. The electronic device can effectively reduce the yellow spot phenomenon, to help improve entire quality of the electronic device.

To make a person in the art understand the technical solutions in this application better, the following clearly and completely describes embodiments of this application with reference to the accompanying drawings and specific embodiments of this application.

In embodiments of this application, an electronic device is included. The electronic device may include a handheld device, an in-vehicle device, a wearable device, a terminal device, or another processing device connected to a wireless modem, or may include a cellular phone (cellular phone), a smart phone (smart phone), a personal digital assistant (personal digital assistant, PDA) computer, a tablet computer, a handheld computer, a laptop computer (laptop computer), a camera, a video recorder, a camera, a smart watch (smart watch), a smart wristband (smart wristband), an augmented reality (augmented reality, AR) device, a virtual reality (virtual reality, VR) device, an in-vehicle computer, and other devices with a display screen. Embodiments of this application do not constitute any special limitation on a specific form of the electronic device. For ease of understanding, the following uses a mobile phone as an example of the electronic device for description.

For ease of describing the technical solutions, a length direction of the electronic device is defined as y, a width direction is defined as x, and a thickness direction is defined as z, where any two directions are perpendicular to each other.

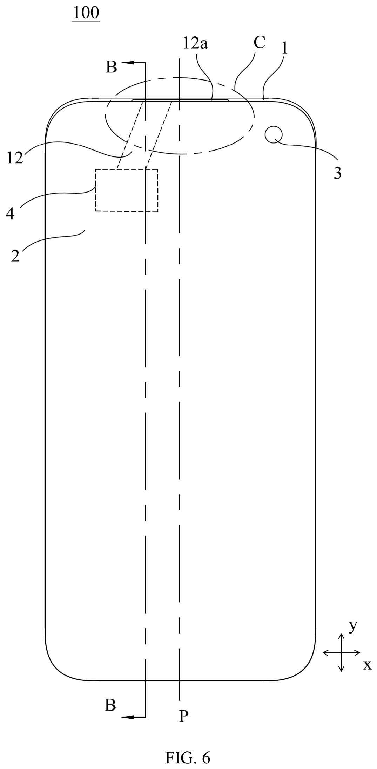

Refer to FIG. 6. A middle frame 1 of an electronic device 100 provided in an embodiment of this application mainly functions to support and protect electronic components of the electronic device. Various electronic components of the electronic device can be arranged inside the middle frame 1. The electronic components mounted inside the middle frame 1 include a mainboard, a battery module, a wireless communication module, a camera module, an audio playback module, and the like. Arrangement positions and mounting methods of these electronic components are not specifically limited in embodiments of this application. An audio playback module may include a sound production component, for example, an earpiece or a speaker. A person skilled in the art should understand that the electronic device may include one or more of the electronic components listed above, and certainly, may alternatively include but not limited to the electronic components listed above in this specification, and may alternatively include other electronic components.

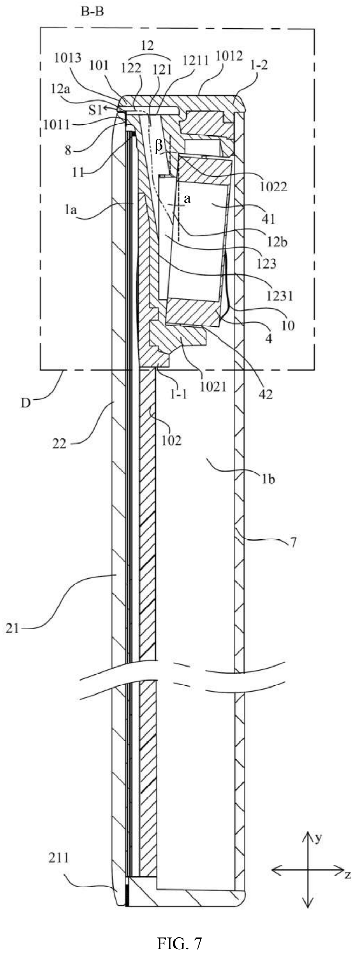

Refer to FIG. 7. In an embodiment of this application, the middle frame 1 includes a metal body 1-1 and a plastic body 1-2. For example, the metal body 1-1 serves as a skeleton and the plastic body is injected and molded in the metal body 1-1 to form the middle frame 1 of an integral structure. The metal body 1-1 may be of aluminum alloy, stainless steel, titanic alloy, or the like. The plastic body 1-2 may be of polystyrene, polypropylene, polyethylene, or the like. Certainly, when a use requirement is met, the middle frame 1 may alternatively include only the plastic body 1-2, and the middle frame 1 may be formed through injection molding, or the middle frame 1 may alternatively include only the metal body, and the middle frame 1 is formed through a mechanical processing.

As shown in FIG. 7, the electronic device 100 may further include a rear cover 7. A display screen 2 and the rear cover 7 are separated at two sides of the middle frame 1 in a thickness direction z of the middle frame 1. A material of the rear cover 7 is not limited herein. During specific practice, a person skilled in the art may make a selection based on an actual requirement. For example, the rear cover 7 may be of a metal material, a plastic material, a ceramics material, a glass material, or the like.

In embodiments of this application, the display screen 2 may be provided on a front surface of the electronic device 100, or may be provided on a back surface of the electronic device, or may be provided on both the front surface and the back surface of the electronic device 100. The front surface of the electronic device 100 may be understood as a surface that faces a user when the user uses the electronic device 100, to be specific, a surface on which the display screen in FIG. 7 is located. The back surface of the electronic device 100 may be understood as a surface that faces away from the user when the user uses the electronic device 100.

In embodiments of this application, for a display module 22 of the display screen 2, a liquid crystal display (liquid crystal display, LCD), an organic light-emitting diode (organic light-emitting diode, OLED), an active-matrix organic light-emitting diode or an active-matrix organic light-emitting diode (active-matrix organic light emitting diode, AMOLED), a flex light-emitting diode (flex light emitting diode, FLED), a quantum dot light-emitting diode (quantum dot light emitting diodes, QLED), an electrophoretic display technology (electrophoretic, E-Ink), or the like may be used. As described above, the display module 22 includes a plurality of functional layers, to implement image and video display. For a quantity and a specific structure of the functional layers, reference may be made to the previous descriptions and the current technology, and details are not described herein. Currently, the OLED is generally used for the display screen 2 of the electronic device. The transparent cover plate 21 covers an outer side of the display module 22 and functions to protect the display module 22. The transparent cover plate 21 may be a glass cover plate, or certainly may be another transparent material that can have a protective function. For example, the transparent cover plate 21 may be made of transparent polyimide. The display screen 2 may also have a touch function, in other words, the display screen 2 may be a touch screen.

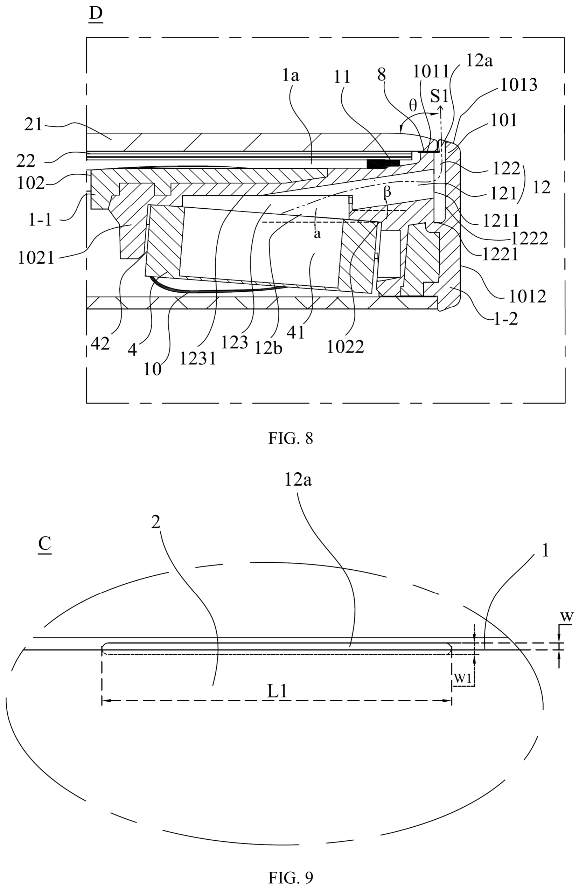

Refer to FIG. 7 and FIG. 8. The transparent cover plate 21 on the display screen 2 completely covers the display module 22, and an outer contour of the transparent cover plate 21 is greater than an outer contour of the display module 22. The transparent cover plate 21 has an extension segment (not numbered in the figure) circumferentially extending beyond the display module 22, and the extension segment is supported by the middle frame 1. In an example, a sealing surface 1011 is circumferentially provided around the middle frame 1, and the extension segment of the transparent cover plate 21 is supported and is sealed with the sealing surface 1011. The extension segment of the transparent cover plate 21 may be adhered and fixed to the sealing surface 1011 by using an adhesive component, for example, an adhesive layer 8.

In this embodiment of this application, the middle frame 1 includes a peripheral wall 101 and a partition plate 102, and the peripheral wall 101 is circumferentially located around the partition plate 102. In this embodiment of this application, both the peripheral wall 101 and the partition plate 102 include the metal body 1-1 and the plastic body 1-2. A side of the partition plate 102 is provided with a first mounting cavity 1a. A side of the first mounting cavity 1a is provided with an opening. The display screen 2 can be mounted in the first mounting cavity 1a. The display module 22 of the display screen 2 can be mounted inside the first mounting cavity 1a through the opening. The transparent cover plate 21 is located at a position of the opening of the first mounting cavity 1a. The transparent cover plate 21 may be partially located inside the first mounting cavity 1a. Certainly, the transparent cover plate 21 may alternatively be completely located inside the first mounting cavity 1a. The partition plate 102 forms a bottom wall of the first mounting cavity 1a. The peripheral wall 101 partially forms a circumferential wall of the first mounting cavity 1a. The peripheral wall 101 partially extends to the other side of the partition plate 102 and a second mounting cavity 1b can be formed on a side of the cover plate 7, for accommodating a battery, an earpiece, or another electronic device. The transparent cover plate 21 is circumferentially sealed and fitted with the peripheral wall 101. It may be learned from the foregoing descriptions that, in this embodiment of this application, the display module 22 may be encapsulated inside closed space enclosed by the transparent cover plate 21 and a cavity wall of the first mounting cavity 1a. A back side of the display module 22 may be further connected to the partition plate 102 by using an adhesive 11. The adhesive 11 may be a double-sided adhesive, a structural adhesive, or a liquid adhesive that can be solidified.

Still refer to FIG. 7 and FIG. 8. In this embodiment of this application, the electronic device further includes a sound production unit 4. The sound production unit 4 is mounted at a side of the partition plate 102 facing away from the display screen 2. In other words, the sound production unit 4 and the display screen 2 are located at two sides of the partition plate 102. The sound production unit 4 may be one of or integration of more of the earpiece, the speaker, or another component that can produce sound. In this embodiment of this application, that the sound production unit 4 is the earpiece is used as an example to describe the technical solutions and the technical effects. For a mobile phone, for ease of answering, the earpiece is generally mounted close to a top position of the mobile phone. Certainly, the earpiece may alternatively be mounted at another position. This is determined based on a specific structure of the electronic device 100. It should be noted that, in this embodiment of this application, the "top" refers to, when the electronic device is in a use state, a part that is of the electronic device and that is at an upper position of the electronic device. Generally, besides the earpiece, a front-facing camera is also provided close to the top of the electronic device 100. A charging port of the electronic device is generally located at an end of the electronic device 100 opposite to the top, in other words, the charging port is located at the bottom of the electronic device 100.

The sound production unit 4 generally is further provided with two elastic pieces (where one elastic piece is shown in the figure), and the two elastic pieces are respectively configured to be electrically connected to a positive feed point and a ground point of a circuit board (not shown). In other words, the two elastic pieces are respectively a positive elastic piece and a negative elastic piece, and the two elastic pieces are electrically connected to corresponding positions on the circuit board. The two elastic pieces are generally located at a side of the sound production unit 4 close to the cover plate. The circuit board may be a mainboard.

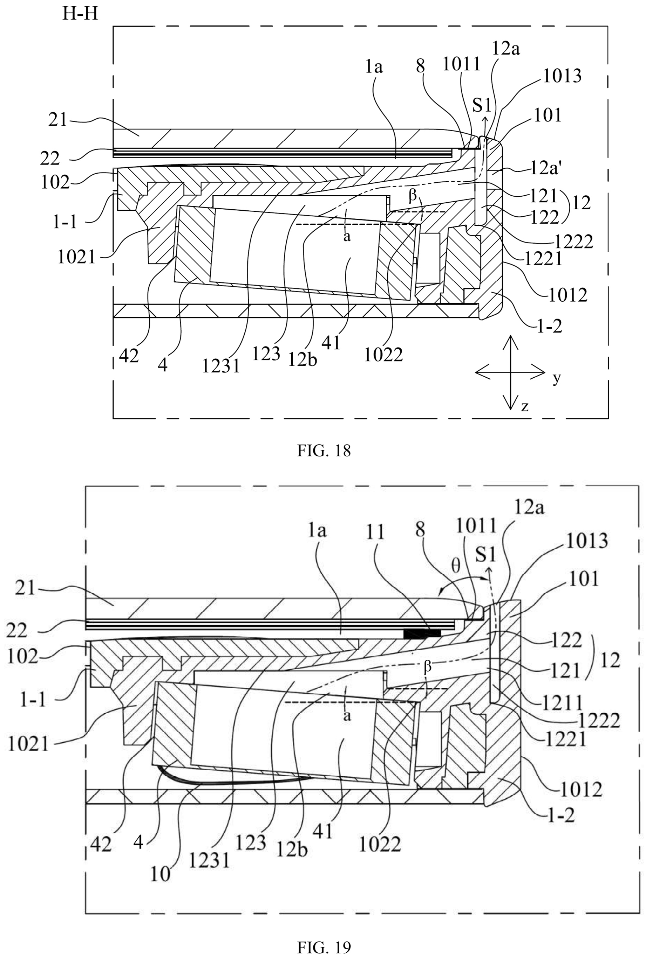

In this embodiment of this application, the middle frame 1 further includes a sound channel 12. A sound produced by the sound production unit 4 can be propagated to the outside of the electronic device along the sound channel 12. In other words, the sound channel 12 is configured to conduct the sound produced by the sound production unit 4 to the outside of the electronic device 100. Specifically, two ends of the sound channel 12 are respectively defined as a sound inlet 12b and a first sound outlet 12a. The sound inlet 12b is located inside the middle frame 1 and is configured to be communicated with a sound cavity 41 of the sound production unit 4. For example, the sound inlet 12b is located at a side of the partition plate 102 away from the display screen 2. The first sound outlet 12a is located on an outer surface of the middle frame 1. Specifically, the first sound outlet 12a is located at a same side as the display screen 2, the first sound outlet 12a is located on a side surface 1013 of the peripheral wall 101, and the side surface 1013 is located at a same side as the display screen 2. In this way, a sound in the sound cavity 41 of the sound production unit 4 enters the sound channel 12 from the sound inlet 12b, is propagated to the first sound outlet 12a along the sound channel 12, and is finally diffused from the first sound outlet 12a to the outside of the electronic device 100. A size and a shape of the sound inlet 12b may match a size and a shape of an outlet of the sound cavity 41, to help the sound in the sound cavity 41 be diffused outward. The first sound outlet 12a may be of a slot structure, and the slot extends along an x direction, as shown in FIG. 6 and FIG. 9. To meet a sound outlet effect of the electronic device, there is a specific requirement for a sound outlet slot of the electronic device. A length L1 (a length extending along the x direction) and a width w of the sound outlet slot need to be appropriately set based on a sound outlet requirement. For example, the width w of the sound outlet slot is approximately 0.3 mm. For a case in which the first sound outlet 12a forms a sound outlet slot, a width of the first sound outlet 12a is equal to that of the sound outlet slot. Refer to FIG. 19. A cross-sectional position of FIG. 19 in an electronic device is the same as a position of B-B in FIG. 7, and FIG. 19 shows only a partial structure of the cross-sectional position. Further, for the electronic device according to an embodiment shown in FIG. 19, except that a structure of a first sound outlet 12a is different from that of the electronic device shown in FIG. 7, another structure of the electronic device shown in FIG. 19 is basically the same as that of the electronic device shown in FIG. 7, and details are not described herein.

For a case in which the transparent cover plate 21 and the peripheral wall 101 of the middle frame form the sound outlet slot, a width wl of the first sound outlet 12a may be slightly greater than the width w of the sound outlet slot. The sound outlet slot having the foregoing width w can preventing impurities, for example, external dirt, from entering the slot as much as possible while ensuring the sound outlet effect.

Certainly, the first sound outlet 12a may alternatively be a plurality of independent holes (not shown) arranged at intervals. A quantity of the holes may be two or more. The specific quantity is not limited provided that the sound outlet effect can be met.

In this embodiment of this application, the display module 22 is located inside the first mounting cavity la, the sound channel 12 is relatively isolated from the first mounting cavity la, and the sound channel 12 is not communicated with the first mounting cavity 1a. In this way, the display module 22 is also relatively isolated from the sound channel 12, so that a medium like oil inside the sound channel 12 is prevented from contacting the display module 22. This greatly reduces a probability of occurrence of a yellow spot phenomenon, so that entire quality of the electronic device is improved.

In this embodiment of this application, the first sound outlet 12a and the display screen 2 are located at a same side. In this way, an angle θ between a main sound outlet direction of the first sound outlet 12a and the display screen 2 is less than 180°. FIG. 8 shows a case in which the angle between the main sound outlet direction of the first sound outlet 12a and the display screen 2 is approximately 90°. Certainly, the angle θ may alternatively be another value, for example, 70° to 150°, or another value less than 180°. In this embodiment of this application, the peripheral wall 101 has the side surface 1013, the side surface 1013 is located at a same side of the display screen 2, and the side surface 1013 is located at a periphery of the transparent cover plate 21. The first sound outlet 12a is at least partially located on the side surface 1013, so that a direction of the first sound outlet 12a faces toward a side at which the display screen 2 is located. This design conforms to a habit of a user to regularly hand-hold a mobile phone, and is convenient for the user to listen.

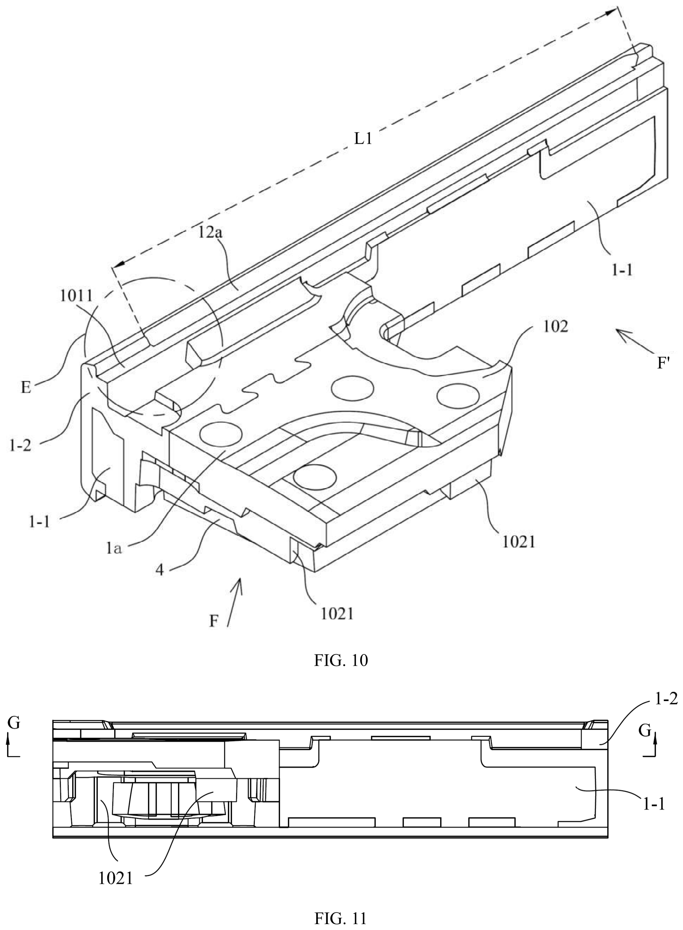

Refer to FIG. 10. In an embodiment of this application, the sound channel 12 is located inside the middle frame 1. The sound channel 12 includes a first hole segment 121 and a second hole segment 122 that are communicated with each other. The first sound outlet 12a is provided at one end of the second hole segment 122 away from the first hole segment 121. The sound inlet 12a is located at one end of the first hole segment 121 away from the second hole segment 122. An extension direction of the first hole segment 121 has an angle β with a plane xy on which the display screen 2 is located. As shown in FIG. 8, the angle β is approximately 9°. In a sound propagation direction, a spacing between the first hole segment 121 and the display screen 2 gradually decreases. In this way, during processing of the first hole segment, a processing device may insert or exit the middle frame 1 in the extension direction of the first hole segment 121, and the processing device may avoid another structure on the middle frame 1, to improve processing convenience.

The plane on which the display screen is located described in this embodiment of this application is a plane approximately parallel to a plane on which a display surface of the display screen 2 is located.

The first hole segment 121 can be located in the plastic body of the middle frame 1. The first hole segment 121 is formed inside the plastic body through an injection molding process. In this way, the first hole segment 121 is formed while the middle frame 1 is formed, and further processing does not need to be performed subsequently, to simplify a processing process of the middle frame 1 and reduce use costs of the electronic device.

For ease of drawing, to the outside of the middle frame, a mold core 9 for forming the first hole segment 121, the first hole segment 121 may be a straight hole segment.

In this embodiment of this application, a cross-sectional area of the first hole segment 121 is greater than or equal to a cross-sectional area of the sound cavity 41. A cross-sectional shape of the first hole segment 121 may be a rectangle. For example, the cross-sectional area of the sound cavity is 5 mm², and a cross-sectional size of the rectangle is 5.2 mm*1 mm. Certainly, the size of the rectangle is not limited to that described in this specification, provided that the foregoing requirement is met. In this embodiment, a cross section of the first hole segment 121 is a rectangle, and the processing is simple. Certainly, the cross-sectional shape of the first hole segment 121 is not limited to the rectangle, and may alternatively be a circle, a polygon, or the like. Although the cross-segmental shape of the first hole segment 121 is not shown in the accompanying drawings, understanding of this solution by a person skilled in the art is not affected.

In this embodiment of this application, for ease of answering and use, a center of the first sound outlet 12a is generally located on a central longitudinal plane P (refer to FIG. 6 for understanding) of the middle frame 1, and the central longitudinal plane P is a plane that passes through a midpoint of a width of the middle frame and that is perpendicular to the display screen 2.

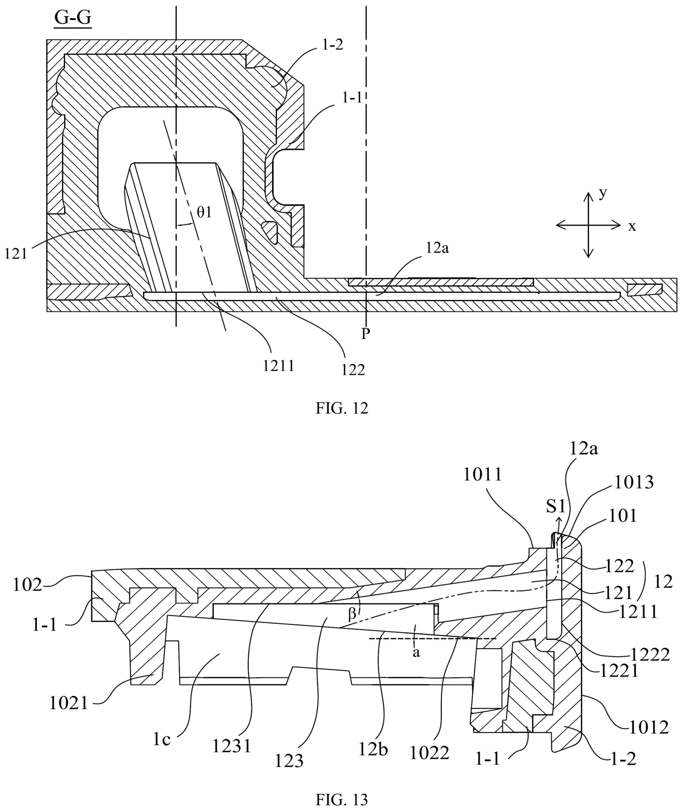

Due to a layout limitation of electronic components inside the middle frame 1, the sound production unit 4 is mounted offset at a side of the central longitudinal plane P. Therefore, the extension direction of the first hole segment 121 has a predetermined angle θ1 with the plane determined by yz. θ1 ranges from 10° to 20°. Refer to FIG. 12. In other words, distances between two ends of the first hole segment 121 and the central longitudinal plane P are different. In comparison with an end of the first hole segment 121 close to the sound production unit 4, a distance between the central longitudinal plane and a connection port 1211 between the first hole segment 121 and the second hole segment 122 is small. In other words, in the sound propagation direction, a spacing between the first hole segment 121 and the central longitudinal plane P gradually decreases.

In this way, the first hole segment 121 may propagate a sound in the sound cavity 41 in a direction toward the central longitudinal plane P, to facilitate uniform diffusion of the sound inside the second hole segment 122, so as to improve quality of the sound diffused to the outside of the electronic device 100.

Refer to FIG. 13. In an embodiment of this application, the second hole segment 122 may be of a slot structure. The second hole segment 122 includes a hole periphery wall 1222 and a hole bottom wall 1221. An outer end of the hole periphery wall 1222 surrounds the first sound outlet 12a. The hole bottom wall 1221 is connected to an inner end of the hole periphery wall 1222. The connection port 1211 where the first hole segment 121 is connected to the second hole segment 122 is provided on the hole periphery wall 12. In this embodiment of this application, the hole bottom wall 1221 is located at a side of the connection port 1211 away from the first sound outlet 12a, and has a predetermined spacing with the connection port 1211. In this way, the second hole segment 122 further has hole space below the connection port 1211. A volume of the second hole segment 122 is large, to help improve quality of a sound propagated to the outside of the electronic device 100.

In addition, considering use strength, during design of the first hole segment 121 and the second hole segment 122, a wall thickness at a position of the smallest thickness of the middle frame 1 should be greater than or equal to 0.32 mm.

Refer to FIG. 13 again. To improve a volume of the sound channel 12 as much as possible, in this embodiment of this application, the sound channel 12 further includes a third hole segment 123. The third hole segment 123 is connected to the first hole segment 121 at a position away from the second hole segment 122. The sound inlet 12b is provided at an end of the third hole segment 123 away from the first hole segment 121. The sound inlet 12b completely covers a sound outlet surface of the sound cavity 41. The sound inlet 12b may have a shape the same as that of the sound outlet surface of the sound cavity 41 of the earpiece. Certainly, the sound inlet 12b in the middle frame 1 may have a shape different from that of the sound outlet surface of the sound cavity 41 of the earpiece. For example, the sound inlet 12b is square, the sound outlet surface is circular, and an outer contour of the square is larger than that of the circular. Alternatively, the sound inlet 12b and the sound cavity 41 have other shapes, provided that the sound inlet 12b can completely cover the sound outlet surface of the sound cavity. In this way, it is beneficial for sound propagation from the sound cavity of the earpiece to the third hole segment 123. In a thickness direction (z direction) of the electronic device 100, the third hole segment 123 is recessed from the sound inlet toward the first mounting cavity 1a by a predetermined depth. In this embodiment of this application, the third hole segment 123 is approximately of a column structure.

In this embodiment of this application, the sound inlet 12b is provided opposite to the sound outlet surface of the sound cavity 41 of the sound production unit 4, and the sound inlet 12b completely covers the sound outlet surface of the sound cavity, to help a sound inside the sound cavity 41 to enter the third hole segment 123. In addition, the first hole segment 123 is communicated with the sound cavity 41 through the third hole segment 123. The third hole segment 123 can increase a volume of the sound channel 12 to some extent, to help improve quality of the sound diffused to the outside of the electronic device 100.

A groove bottom wall 1231 of the third hole segment 123 opposite to the sound inlet may be a plane, parallel to the plane on which the display screen 2 is located, and the plane is easy to be processed. The groove bottom wall 1231 of the third hole segment 123 opposite to the sound inlet forms a predetermined angle with the extension direction of the first hole segment 121, and the angle is approximately equal to β.

In this embodiment of this application, a thickness of a section of the partition plate 102 for being provided with the first segment 121 is large. To reduce a thickness of the electronic device 100 as much as possible, the partition plate 102 may be provided as follows.

Refer to FIG. 13. In this embodiment of this application, a side of the partition plate 102 facing away from the first mounting cavity 1a has a mounting surface 1022. The sound inlet 12b is provided on the mounting surface 1022. After being assembled, the mounting surface 1022 is contacted and fitted with a side wall at a sound cavity side of the sound production unit 4. The mounting surface 1022 has a predetermined angle with the plane (an xy plane) on which the display screen 2 is located. The angle α may range from 4° to 6°. The sound inlet 12b faces toward a direction of the first segment.

In comparison with the mounting surface 1022 of the sound production unit 4 parallel to the xy plane (a horizontal direction in FIG. 13), in this embodiment of this application, the mounting surface 1022 has a predetermined angle with the xy plane. In this way, the sound production unit 4 is inclined after being mounted, and an end of the sound production unit 4 away from the first segment can be elevated to a side of the display screen 2 by a predetermined height, to reduce an overall mounting height of the sound production unit 4 and further reduce the overall thickness of the electronic device 100.

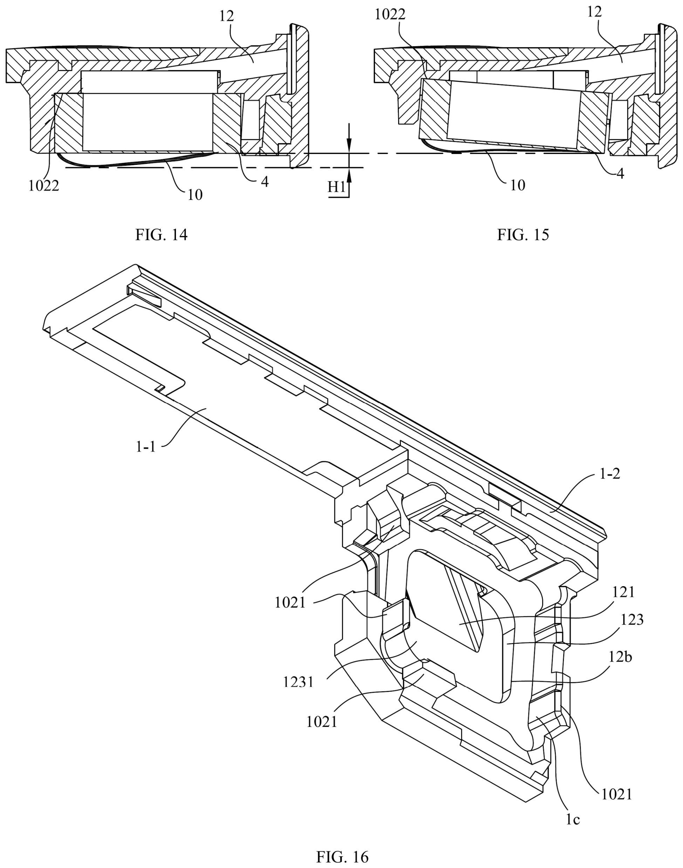

FIG. 14 and FIG. 15 are diagrams of overall structures of middle frames having two different mounting surfaces 1022. The mounting surface 1022 in FIG. 14 is provided parallel to the display screen 2, and the mounting surface 1022 has a predetermined angle with the display screen 2 in FIG. 15. Apparently, a left side of the sound production unit 4 in FIG. 15 is elevated by at least a height of h1, a side of the sound production unit 4 far away from the partition plate 102 has space, and the positive elastic piece and the negative elastic piece of the sound production unit 4 can be arranged in the space, so that the structure of the electronic device 100 is more compact, to help reduce the thickness of the electronic device 100.

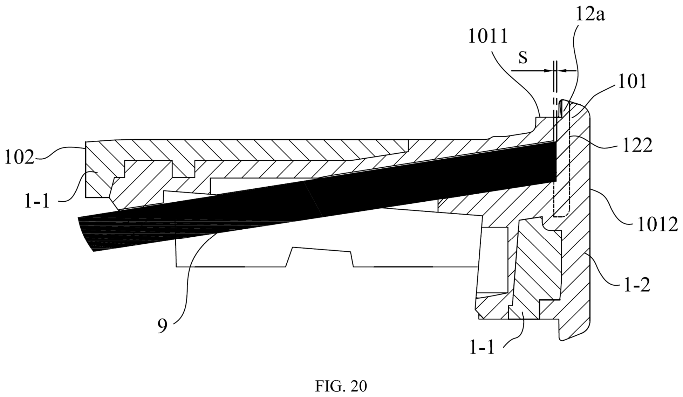

In addition, that the mounting surface 1022 is obliquely provided also helps the mold core 9 forming the first hole segment 121 to be smoothly drawn to the outside of the middle frame 1. Refer to FIG. 20 for understanding.

The mounting surface 1022 may be sealingly and fixedly connected to a side wall of the sound production unit 4 by using an adhesive (not shown in the figure), so that a mounting process is simple and reliable. The adhesive may be a structural adhesive, or may be a liquid adhesive that can be solidified into an adhesive layer, or certainly may be a double-sided adhesive. In an example, a sticky adhesive may be applied to the mounting surface 1022, and then the earpiece is adhered to the mounting surface.

Refer to FIG. 13 and FIG. 16 again for understanding. In this embodiment of this application, the middle frame 1 further includes a plurality of positioning blocks 1021 circumferentially located around the mounting surface 1022. The plurality of positioning blocks 1021 surround mounting space 1c of the earpiece. The positioning block 1021 is configured to be fitted with a corresponding circumferential outer wall 42 of the sound production unit 4 for positioning. Specifically, a quantity of positioning blocks 1021 may be determined based on an outer shape of the sound production unit 4, for example, three or four or more. Shapes of the positioning blocks may be the same or different.

The positioning blocks 1021 may be simultaneously formed with the plastic body in an injection molding process, or after the positioning blocks 1021 are formed with the plastic body, a fitting surface on each of the positioning blocks 1021 is precisely processed and formed through the mechanical processing process.

The positioning block 1021 may be in clamping and limiting or interference fit with a corresponding structure of a circumferential outer wall 42 of the sound production unit 4, to further improve reliability of mounting of the sound production unit 4.

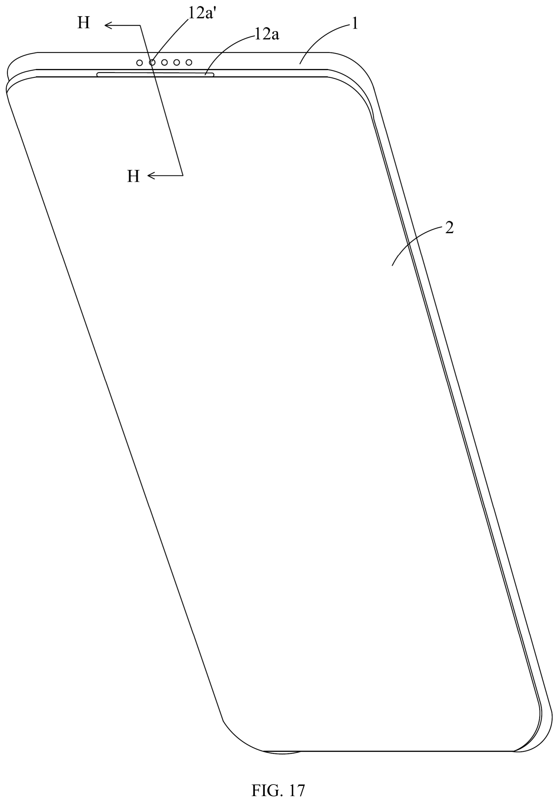

In an embodiment of this application, another embodiment of the electronic device is further provided. Refer to FIG. 17 and FIG. 18. FIG. 18 is a cross-sectional view of FIG. 17 taken along H-H. Main difference between this embodiment and the embodiment shown in FIG. 7 lies in that: The electronic device shown in FIG. 17 and FIG. 18 is additionally provided with a first sound outlet 12a' on an outer peripheral surface 1012 of the peripheral wall. The first sound outlet 12a' connects the second hole segment 122 to the outer peripheral surface 1012 of the middle frame. There may be a plurality of first sound outlets 12a'. All the first sound outlets 12a' are provided on the top of the middle frame 1, and are arranged along the x direction.

In this embodiment of this application, a sound in the sound channel 12 is diffused to the outside of the middle frame through the first sound outlet 12a and the first sound outlet 12a' at the same time, to help achieve a three-dimensional stereophonic sound effect and improve effect of quality of the sound in the earpiece.

Another structure in an embodiment is the same as the structure of the electronic device shown in FIG. 7, and is not described in detail.

In addition, in this embodiment of this application, the sound production unit 4 may be integrated with both the earpiece and the speaker. The speaker is a component that vibrates to generate a sound according to an electroacoustic transformation principle. The sound produced by the speaker is propagated to the sound channel through the sound cavity, and finally diffused and propagated to the outside of the electronic device through the first sound outlet 12a, to form an output sound of the electronic device.

As described above, the middle frame 1 may include the plastic body 1-2, and the sound channel 12 may be completely formed in the plastic body 1-2. In comparison with the sound channel 12 being provided in the metal body 1-1, it is easier to process the sound channel 12 in the plastic body 1-2. In this embodiment of this application, both FIG. 6 and FIG. 18 show an example in which the sound channel 12 is completely located in the plastic body.

Certainly, only a part of hole segments of the sound channel 12 may be formed in the plastic body 1-2, for example, one or two of the first hole segment 121, the second hole segment 122, or the third hole segment 123.

It may be learned from the foregoing descriptions that, in this embodiment of this application, the first hole segment 121 has an angle with respect to both the xy plane and the yz plane. If it is difficult to perform the mechanical processing process, the injection molding process may be used, and the first hole segment 121 is integrally formed through the injection molding process.

In this embodiment of this application, the first hole segment 121 is integrally formed with the plastic body 1-2 through the injection molding process. Certainly, under conditions allowed by the process, the second hole segment 122 may also be integrally formed with the plastic body 1-2 through the injection molding process. The injection molding process is simple and efficient to form each hole segment.

To reduce difficulty in the injection molding process, the second hole segment 122 may alternatively be obtained by removing, after the plastic body 1-2 is formed, a material at a corresponding position of the plastic body 1-2 through the mechanical processing process. For example, mechanical processing may include a milling process, a cutting process, or the like.

Material burrs may remain after the material is removed through the mechanical processing. To improve surface precision of an inner wall of the second hole segment 122, a tool, for example, a contour plug having a same shape as that of the first hole segment 121 may further be used to remove the burrs inside the second hole segment 122.

Refer to FIG. 20. For an implementation in which the first hole segment 121 is formed through the injection molding process, and the second hole segment 122 is formed by removing a material through the machining process, to ensure that the first hole segment 121 is communicated with the second hole segment 122, the mold core 9 for forming the first hole segment 121 in the injection molding process may be partially located at a to-be-formed position of the second hole segment 122, and a length S by which the mold core 9 extends into the second hole segment 122 may be approximately 0.25 mm. After the injection molding process, the plastic body is injected and molded into all positions other than a position of the mold core. After the mold core is drawn, the first hole segment and a position of the second hole segment 122 close to the first hole segment 121 are both formed with a hole structure. In other words, after the injection molding process, before the material is not removed, the first hole segment 121 is communicates with the second hole segment 122.

For another structure of the electronic device, refer to the current technology.

Based on the electronic device, an embodiment of this application further provides a processing method for a middle frame is further provided.

S1: Preprocess the metal body 1-1 of the middle frame and the mold core 9 matching with the first hole segment 121.

S2: Place the metal body 1-1 and the mold core 9 at a corresponding position of an injection molding device, and form the plastic body 1-2 through the injection molding process, where the plastic body 1-2 and the metal body 1-1 are formed into an integrated middle frame.

A specific Z direction slot is reserved between the mold core 9 and the metal body 1-1, to prevent the mold core 9 from colliding with the metal body during placement and subsequent drawing. The slot is approximately 0.8 mm.

S3: Draw the mold core 9 to the outside of the middle frame 1.

An end of the mold core 9 located in the injection body 1-2 can be connected to an external power device. Under traction of the power device, the mold core 9 can be released from the plastic body 1-2. To successfully draw the mold core 9 outside the middle frame 1, a unilateral draft angle of the mold core 9 in a drawing direction and the z direction is approximately 0.5°.

S4: Remove a material at a corresponding position of the plastic body 1-2 in a mechanical processing manner, to form the second hole segment 122 and the mounting surface 1022 fitted with the sound production unit 4.

The second hole segment 122 having a small size may be cut by using a thin tool, for example, a blade.

In the foregoing embodiment, when the mounting surface 1022 has a predetermined angle with the xy plane, and the mounting surface 1022 is mechanical-processed, the middle frame 1 may be inclined at a predetermined angle to place, to facilitate drawing of the mold core 9 to the outside of the middle frame 1.

In this embodiment of this application, according to the processing method, the middle frame 1 of the foregoing structure can be formed. Therefore, the processing method for the middle frame 1 also has the foregoing technical effects of the foregoing middle frame 1.

In the descriptions of this application, it should be noted that, in embodiments of this application, the terms "first", "second" and the like are used merely for the purpose of description, and shall not be construed as indicating or implying relative importance or implying a quantity of indicated technical features. Therefore, a feature limited by "first", "second", and the like may explicitly or implicitly include one or more of the features.

In the descriptions of embodiments of this application, it should be noted that, unless otherwise explicitly specified or defined, the terms "mount", "connected", and "connection" should be understood in a broad sense. For example, the "connection" may be a detachable connection or an integral connection; or may be a direct connection, or an indirect connection through an intermediary. The " fixedly connected" refers to being connected to each other and the relative position relationship after being connected is unchanged.

The orientation terms such as "inside", "outside", and the like mentioned in embodiments of this application are only directions with reference to the accompanying drawings. Therefore, the orientation terms used are intended to describe and understand embodiments of this application better and more clearly, and are not intended to indicate or imply that the indicated apparatus or element needs to have a specific orientation and be constructed and operated in the specific orientation. Therefore, such terms should not be construed as a limitation on embodiments of this application. In addition, unless otherwise specified in this application, "a plurality of" mentioned in this application means two or more.

In embodiments of this application, the terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Without more limitations, elements defined by the sentence "including one..." does not exclude that there are still other same elements in the process, method, object, or apparatus which includes the element.

"And/or" in embodiments of this application describes only an association relationship for describing associated objects and indicates that three relationships may exist. For example, A and/or B may represent: Only A exists, both A and B exist, and only B exists. In addition, the character "/" in this specification generally indicates an "or" relationship between the associated objects.

The foregoing descriptions are merely preferred embodiments of this application, and a person of ordinary skill in the art may make various improvements and refinements without departing from the spirit of this application. All such modifications and refinements are also to be considered as the protection scope of this application.

## Claims

1. A middle frame of an electronic device, the electronic device comprising a display screen and a sound production unit, wherein the middle frame comprises:
a partition plate and a peripheral wall, wherein the peripheral wall is circumferentially provided around the partition plate, so that a first mounting cavity having an opening is formed in the middle frame, and the peripheral wall has a sealing surface that is provided circumferentially, the sealing surface is configured to be circumferentially sealed with a transparent cover plate of the display screen, and the peripheral wall further comprises a side surface located at a same side as the display screen; and
a sound channel, configured to conduct a sound in the sound production unit to the outside of the middle frame, wherein the sound channel is relatively isolated from the first mounting cavity, and the sound channel comprises a sound inlet and a first sound outlet, the sound inlet is configured to be communicated with a sound cavity of the sound production unit, and the first sound outlet is provided on the side surface.

2. The middle frame of the electronic device according to claim 1, wherein the peripheral wall has a stepped surface, the sealing surface is provided on the stepped surface, the transparent cover plate is supported on the stepped surface, and the first sound outlet is located at a side of the sealing surface away from the first mounting cavity.

3. The middle frame of the electronic device according to claim 1, wherein the sound channel comprises a first hole segment and a second hole segment that are connected, wherein the first hole segment is at least partially located inside the partition plate, the second hole segment is located inside the peripheral wall and extends in a thickness direction of the electronic device, and the first sound outlet is located at an end of the second hole segment away from the first hole segment, and the sound inlet is located at an end of the first hole segment away from the second hole segment.

4. The middle frame of the electronic device according to claim 3, wherein in a sound propagation direction, a distance between the first hole segment and a plane on which the display screen is located gradually decreases.

5. The middle frame of the electronic device according to claim 3 or 4, wherein the sound inlet is mounted offset to a side of a central longitudinal plane of the middle frame, and in the sound propagation direction, a spacing between the first hole segment and the central longitudinal plane gradually decreases.

6. The middle frame of the electronic device according to any one of claims 3 to 5, wherein the second hole segment comprises a hole periphery wall and a hole bottom wall that are connected, a connection port where the first hole segment is connected to the second hole segment is provided on the hole periphery wall, and the hole bottom wall is located at a side of the connection port away from the first sound outlet and has a predetermined spacing with the connection port.

7. The middle frame of the electronic device according to any one of claims 3 to 6, wherein the sound channel further comprises a third hole segment, wherein the third hole segment is connected to the first hole segment at a position away from the second hole segment, the sound inlet is provided at an end of the third hole segment away from the first hole segment, the sound inlet completely covers a sound outlet surface of the sound cavity of the sound production unit, and in the thickness direction of the electronic device, the third hole segment is recessed from the sound inlet toward the first mounting cavity by a predetermined depth.

8. The middle frame of the electronic device according to claim 7, wherein a groove bottom wall of the third hole segment opposite to the sound inlet is parallel to the plane on which the display screen is located.

9. The middle frame of the electronic device according to claim 7, wherein a side of the partition plate facing away from the first mounting cavity has a mounting surface that is configured to be sealed and fitted with a side wall of the sound production unit located at a sound outlet surface side, the mounting surface is provided around the sound inlet, and the mounting surface has a predetermined angle with the plane on which the display screen is located.

10. The middle frame of the electronic device according to claim 9, wherein the middle frame further comprises a plurality of positioning blocks, wherein the positioning blocks are circumferentially located around the mounting surface, all the positioning blocks surround mounting space of the sound production unit, and the positioning block is configured to be fitted with a corresponding peripheral wall of the sound production unit for positioning, so that the sound outlet surface is provided opposite to the sound inlet.

11. The middle frame of the electronic device according to any one of claims 3 to 10, wherein the middle frame comprises at least a plastic body, and the sound channel is located in the plastic body.

12. The middle frame of the electronic device according to claim 11, wherein at least the first hole segment is integrally formed with the plastic body through an injection molding process.

13. The middle frame of the electronic device according to claim 11, wherein the second hole segment is processed to shape through a cutting process or a milling process.

14. The middle frame of the electronic device according to any one of claims 3 to 13, wherein the peripheral wall comprises an outer peripheral surface, and the middle frame further comprises a second sound outlet, the second sound outlet connects the second hole segment to the outer peripheral surface.

15. The middle frame of the electronic device according to any one of claims 1 to 14, wherein the first first sound outlet is of a slot structure.

16. An electronic device, comprising:
the middle frame of the electronic device according to any one of claims 1 to 15; and
a display screen, comprising a transparent cover plate and a display module, wherein the display module is located in a first mounting cavity, and the transparent cover plate is circumferentially sealed and fitted with a sealing surface.

17. The electronic device according to claim 16, wherein a sound production unit comprises one of or integration of more of an earpiece, a speaker, and a microphone.

18. A processing method for the middle frame of the electronic device according to any one of claims 3 to 15, wherein the middle frame comprises a metal body and a plastic body, and the method comprises:
preprocessing the metal body and a mold core configured to form the first hole segment;
placing the metal body and the mold core at a corresponding position of an injection molding device, and forming the plastic body through an injection molding process, wherein the plastic body and the metal body are formed into an integrated structure;
drawing the mold core to the outside of the middle frame; and
processing a second hole segment on the plastic body through a mechanical processing process.
